# EUROPEAN PATENT SPECIFICATION

(11) **EP 4 455 019 B1**
(45) Date of publication and mention of the grant of the patent: **11.02.2026**
(21) Application number: 23170281.2
(22) Date of filing: 27.04.2023
(51) Int. Cl.: B64D 37/08, B64C 1/06, B64C 1/10

(54) **TANK WITH AT LEAST ONE ANTI-SLOSHING WALL ARRANGEMENT, AND AIRCRAFT WITH SUCH TANK**
TANK MIT MINDESTENS EINER SCHWALLSCHUTZWANDANORDNUNG UND FLUGZEUG MIT SOLCH EINEM TANK
RÉSERVOIR AVEC AU MOINS UN AGENCEMENT DE PAROI ANTI-BALLOTTEMENT, ET AÉRONEF AVEC UN TEL RÉSERVOIR

(43) Date of publication of application: 30.10.2024
(73) Proprietor: Airbus Operations GmbH, 21129 Hamburg (DE)
(72) Inventor: LINDE, Peter, 21129 Hamburg (DE); HEGENBART, Matthias, 21129 Hamburg (DE)
(74) Representative: Marschall, Stefan

(56) References cited:
- WO-A2-2024/005760
- CN-A- 115 593 609
- DE-A1- 102014 107 316
- KR-A- 20120 033 827
- KR-A- 20160 034 517
- KR-A- 20180 015 324
- KR-B1- 101 533 780
- US-A- 3 951 362
- US-B2- 9 599 284

## Description

The present invention concerns a tank, in particular a tank for an aircraft, the tank comprising at least one anti-sloshing wall arrangement. The invention further concerns an aircraft comprising such tank.

Tanks may serve as a vessel not only to store, but also to transport a respective liquid from one location to another, such as for using the liquid at another place than extracting it. Moreover, tanks may be used for carrying a fuel used for driving the respective transporting means.

In particular, aircraft typically comprise one or more tank/s containing a fuel to be supplied to the aircraft's one or more engines. Different positions are known for the tanks, depending on a respective type and designs of the aircraft.

Conventionally, the respective fuel of such aircraft may be an aviation gasoline or a jet fuel, for instance. In order to achieve a considerable emission reduction or even a zero emission, alternative drives for aircraft have been searched for, and hydrogen-electric aircraft engines have emerged as a promising possibility. In particular, turbo fans and fuel cells respectively driven with hydrogen have been developed as aircraft engines. In either case, considerable space is needed, in the aircraft, for the hydrogen storage even in the cooled liquid state thereof; a storage temperature targeted is about -253°C at a pressure of approximately 3 bar.

Therein, the liquid hydrogen may be carried in several tanks which in particular may be positioned in the wings or in a fuselage section of the aircraft. To minimise temperature losses and boil-off, however, a tank with a large capacity and an advantageous surface-to-volume ratio is advantageous.

Such single or main tank may be positioned in an aft portion of a fuselage of the aircraft. Alternatively, such tank may be placed directly behind a fuel cell or electric engine unit in a pod under the wings of the aircraft.

Pipes are necessary inside a liquid hydrogen tank for controlling and collecting boiled off gaseous hydrogen, further for collecting hydrogen (e.g., to unload or to supply it to a respective engine), and for filling the tank.

However, when a tank with liquid content is moved, there is a risk of sloshing, as may occur when the vessel is moved hastily. The sloshing takes place in the form of inertia forces acting on the liquid, and it effects that a centre of gravity of the combined tank and liquid may move. In case of an aircraft's tank, where the hasty movement may occur during manoeuvring of the aircraft, large such moves are detrimental to a steering and control of the movement, and they thus pose a safety issue, as they may interfere with the aircraft's stability. To reduce such moves, conventional tanks are known which are segmented by anti-sloshing walls. Such anti-sloshing walls suppress an excessive amount of sloshing, as most of the liquid volume behind the walls will not transfer into the respective next segment. Document US3951362A shows a cryogenic liquid container that is carried within the fuselage of an aircraft with baffles and support structure provided for taking up the slosh loads.

It is an object of the present invention to provide a technique facilitating an improved liquid transport.

The object is achieved with a tank according to claim 1, and with an aircraft according to claim 13. Advantageous embodiments are disclosed in the dependent claims, the description, and the drawings.

A tank according to the present invention comprises at least one anti-sloshing wall arrangement which includes a frame portion fixed to a tank wall of the tank, and a door portion. The frame portion edges (i.e., borders) an opening, and the door portion is configured to selectively close or unclose the opening. In particular, at least a part of the door portion is thus moveable relative to the frame portion.

A state of the anti-sloshing wall arrangement in which the opening is closed by the door portion is further referred to herein as its "closed state", and analogously, a state of the anti-sloshing wall arrangement in which the opening is unclosed by the door portion is further referred to herein as its "unclosed state". As is to be noted, in the closed state, the anti-sloshing wall arrangement may not necessarily be impervious, but still include one or more small hole/s and/or gap/s. In particular, the anti-sloshing wall arrangement, may be considered as in the closed state (and the door portion may be considered as closing the opening) if at least 90% or at least 95% of the opening is covered by the door portion.

The tank may in particular be a storage tank adapted to be transported, by a vehicle such as a truck, a train or a ship, e.g. for using a liquid contained in the tank at a respective destination. Alternatively, the tank may be configured to store fuel to be supplied to an engine of a vehicle transporting the tank. Such vehicle may be a truck, a train or a ship, for instance. According to advantageous embodiments of the present invention, the vehicle is an aircraft.

An aircraft according to the present invention comprises such tank and at least one engine configured to be fed with fuel contained in the tank. The tank may be constructed as independent from a fuselage of the aircraft, or it may be integrated in the aircraft's fuselage, such that a portion of a skin (i.e., of a shell) of the fuselage serves as a tank wall of the tank.

The present invention thus facilitates a robust construction and a simple operation (to close/ unclose the opening) of the at least one anti-sloshing wall arrangement, which segments an interior space of the tank into compartments. Therewith, a particularly efficient sloshing reduction can be achieved when the opening is closed. On the other hand, as the opening edged by the frame can optionally be unclosed, the present invention advantageously facilitates a passage (in the unclosed state of the anti-sloshing wall arrangement) from one of said compartments to an adjacent one. Accordingly, at least a tool such as a camera, a robot and/or a robot arm can be put through the opening, such as for inspection, reparation and/or cleaning purposes.

In particular, the opening may preferably include an area of at least 45cm x 50cm, at least 45cm x 45cm, or at least 30cm x 45cm. Such dimension of the opening may ensure that a person can pass through the opening. If the tank comprises several anti-sloshing wall arrangements, the respective frame portions thereof may preferably each edge a such sized opening.

As a consequence, a number of entrances into the interior space of the tank can be reduced, which simplifies a construction of the tank, improves its safety and reduces its weight. Such entrance may provide access for a person or a tool (such as a robot or robot arm) to the interior space (i.e., the tank volume). It may preferably be positioned in one of two opposite heads of the tank, or in a tank wall between two opposite heads of the tank. In particular, the tank may preferably have a single entrance (only) into its interior space (i.e., the tank volume).

The opening edged by the frame portion may preferably be rectangular. This facilitates a particularly simple construction of the door portion.

According to advantageous embodiments, the opening may have a diameter of at most 90cm or at most 80cm or at most 70cm; such upper bound for the opening's size can advantageously improve a stability of the anti-sloshing wall arrangement and facilitate a reduced weight thereof. As is to be understood, the "diameter" of the opening is defined as the largest occurring distance of two boundary points of the opening; in particular, in case of a rectangular opening, it thus equals the length of each of the opening's diagonals.

According to advantageous embodiments of the present invention, the tank is configured as a pressure vessel. In particular, the tank may be a liquid hydrogen tank, i.e., configured to contain liquid hydrogen (LH2). The at least one engine of an aircraft according to the present invention and comprising such tank may then be a hydrogen fuel burn turbo fan and/or a hydrogen driven fuel cell.

The frame portion may be at least partially made of a same material as the door portion, and/or at least partially of a material different from a material of the door portion. Additionally or alternatively, the frame portion and/or the door portion may be at least partially made of a same material as a tank wall of the tank, or of a material different from a material of the tank wall.

In particular, the frame portion and/or the door portion may preferably be at least partially made of a metal (such as aluminium or an aluminium alloy), and/or of plastic, in particular of a fibre reinforced polymer, more specifically of a carbon fibre reinforced polymer. The polymer in these cases may in particular a thermoplastic polymer. For instance, with a (carbon) reinforced polymer as a material, a particularly lightweight construction of the at least one anti-sloshing wall arrangement and, therewith, of the tank can be realised.

The tank may be or comprise at least a portion which is cylindric, conical, or prismatic. The frame portion of the at least one anti-sloshing wall arrangement may in particular run along an abstract (mathematical) plane. Such plane may be orthogonal to a longitudinal axis of the tank. In embodiments where the tank is configured as a tank of an aircraft, said plane may be orthogonal to a designated flying direction of the aircraft.

The door portion may comprise at least one wing which is pivotable relative to the frame portion for selectively closing or unclosing the opening.

According to preferred embodiments, the door portion comprises one or several sliding door plate/s configured to linearly move relative to the frame portion for selectively closing or unclosing the opening. Thereby, a particularly good stability against sloshing loads acting on the closed door portion can be achieved. Moreover, such door portion may be easily operated to close the opening even if the tank is filled with a liquid.

In particular, the frame portion in such embodiments may preferably comprise a slide rail guiding the sliding door plate/s.

In an orientation designated for use of the tank, the one or several sliding door plate/s may in particular be configured to slide in a horizontal or vertical direction; the configuration of a vertical movement advantageously allows using gravity for operating the door portion to either close or unclose the opening. In particular, at least one of the sliding door plate/s may be configured to be elevated for closing (or for unclosing) the opening. To unclose (or close, respectively) the opening later on, the sliding door plate thus just can be dropped.

According to advantageous embodiments in which the door portion of the at least one anti-sloshing wall arrangement comprises several sliding door plates (as mentioned above), at least two of these plates may comprise at least one respective hook portion configured to engage (at least when the plates are in a predetermined engagement position relative to each other) with the hook portion of the respective other sliding door plate. Accordingly, a first one of the sliding door plates may be configured to hold, by means of the engaged hook portions, a second one of the sliding door plates in a particular position relative to the frame portion, (e.g., to close the opening) and/or to move the second sliding door plate during a closing and/or an unclosing operation of the door portion. Thereby, the holding and/or moving of the door portion can be simplified.

The at least one anti-sloshing wall arrangement of a tank according to the present invention may advantageously comprise a fastener for selectively locking (i.e., arresting) or unlocking the door portion in a predetermined position relative to the frame portion. For instance, such fastener may be configured to lock the door portion in a position in which the door portion closes the opening edged by the frame portion, and/or in a position in which the door portion uncloses the opening.

The fastener may be configured to be operated (so as to lock and/or so as to unlock the door portion in said predetermined position thereof) manually (by a person or a robot). For instance, it may comprise a lock bar with a corresponding catch.

Additionally or alternatively, the at least one anti-sloshing wall arrangement may comprise a means for automatically operating the fastener. For instance, such means may comprise an electromagnet configured to move a magnetic block of the fastener in at least one direction. Such movement may be or at least comprise a linear movement and/or a rotation of the fastener.

According to advantageous embodiments, the fastener may comprise a latch with an elastic element (such as a spring), the latch configured to snap into an locking position when the door portion is in said predetermined position relative to the frame portion. In particular, in such case, the moving door portion may itself serve to operate the fastener, by pushing the latch (e.g., with a chamfered surface) against an elastic force of the elastic element before the latch snaps into the locking position.

In a specific advantageous embodiment, the at least one anti-sloshing wall arrangement comprises an electromagnet, at least one magnetic block configured to engage with the door portion in said predetermined position thereof, and an elastic element (such as a spring) whose elastic force urges the magnetic block away from the electromagnet. Accordingly, when the door portion is in said predetermined position, the magnetic block may snap, due to the elastic element, into a recess, thereby locking (arresting) the door portion in said predetermined position. By operating the electromagnet, the magnetic block may then be pulled, against the elastic force of the elastic element, out of the recess, whereby the fastener may be operated to unlock the door portion.

The door portion of the at least one anti-sloshing wall arrangement may be configured to be operated (for closing and/or for unclosing the opening) manually (by a person or a robot). To make such operation easier, the anti-sloshing wall arrangement may comprise at least one gear and/or a crank.

Additionally or alternatively, the at least one anti-sloshing wall arrangement may comprise a motor (in particular, an electric motor) configured to drive an operation of the door portion for a closing and/or unclosing the opening. Preferably, such motor is controllable by a control unit outside the interior space of the tank. According to preferred embodiments, the motor may comprise a linear motor.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown is schematically in
- Fig. 1a:: an insight into a tank according to an exemplary embodiment of the present invention, with an anti-sloshing wall arrangement in an unclosed state;
- Fig. 1b:: the insight of Figure 1a with the anti-sloshing wall arrangement in a closed state;
- Fig. 2:: an illustration of a tank according to an exemplary embodiment of the present invention; and
- Fig. 3:: an illustration of an aircraft according to an embodiment of the present invention.

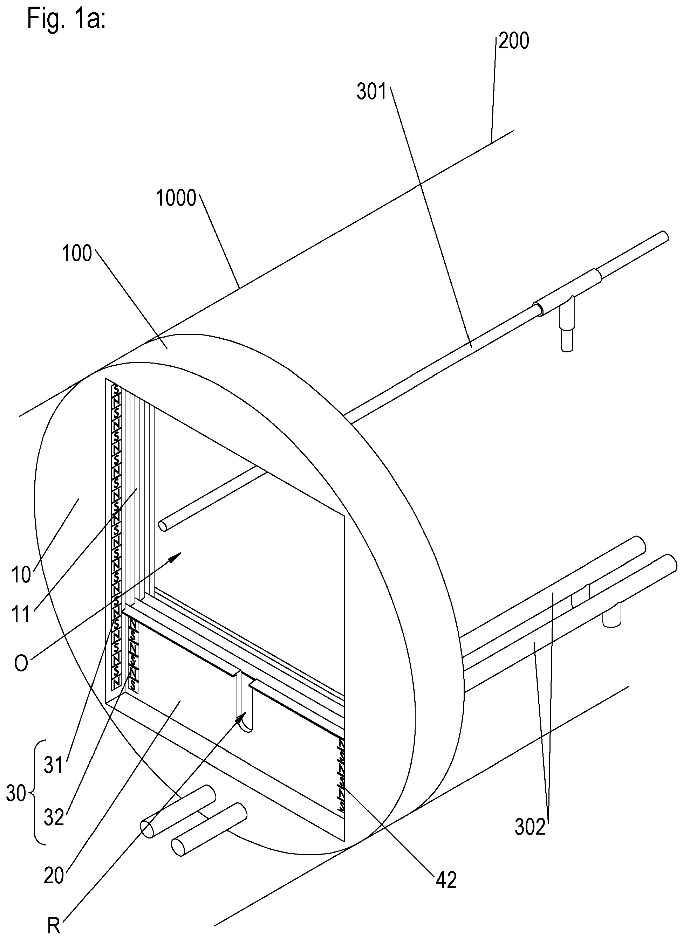

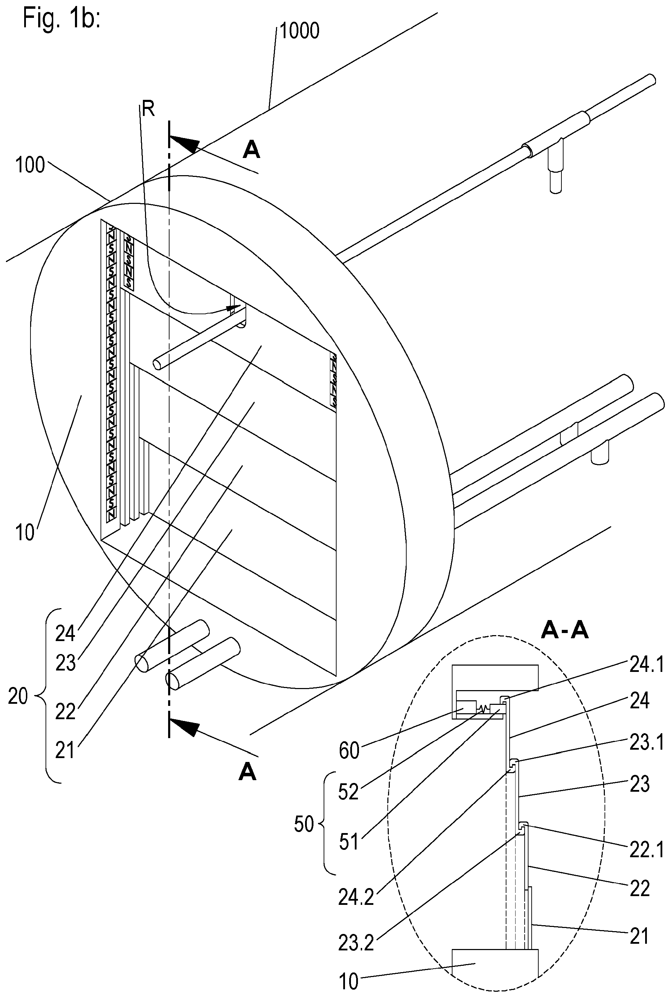

Figures 1a and 1b each provide an insight into a tank 1000 according to an exemplary embodiment of the present invention in an orientation designated for use of the tank 1000. In particular, an anti-sloshing wall arrangement 100 comprising a frame portion 10 and a door portion 20 is shown. The frame portion 10 of the anti-sloshing wall arrangement 100 is fixed to a tank wall 200 of the tank 1000. In the exemplary case shown, the tank wall 200 is cylindric.

An opening O edged by the frame portion 10 is configured to be selectively closed or unclosed with the door portion 20; Figure 1a shows a situation in which the opening O is unclosed by the door portion 20, whereas in the situation depicted in Figure 1b, the opening O is closed by the door portion 20. Preferably, the opening is sized so as to allow a person to pass through the opening. In particular, it may preferably include an area of at least 45cm x 50cm, at least 45cm x 45cm, or at least 30cm x 45cm.

The door portion 20 in the embodiment depicted comprises three slidable door plates 22, 23, 24 configured to slide vertically relative to the frame portion 10 and relative to a fixed plate 21 further comprised by the door portion and stationary relative to the frame portion 10. Therein, the slidable door plates 22, 23, 24 are guided by two opposite lateral slide rails 11 (only one of which is visible in Figures 1a, 1b due to the perspective).

In the unclosed state of the anti-sloshing wall arrangement 100, the slidable door plates 22, 23, 24 and the fixed plate 21 are collocated side by side (i.e., with their respective largest surfaces facing a respective adjacent one of said plates), as seen in Figure 1a. To close the opening O, the slidable door plates 22, 23, 24 are moved upwards relative to the frame portion 10.

In the embodiment depicted, and as best seen in the cross section A-A in Figure 1b, the slidable door plates 22, 23, 24 each comprise at least one respective hook portion 22.1, 23.1, 23.2, 24.2 configured to engage with the hook portion of a respective neighboured one of the sliding door plates 22, 23, 24.

As a consequence, in the closed state of the anti-sloshing wall arrangement 100, the upmost slidable door plate 24 holds the slidable door plate 23 being located directly underneath by means of the respective hooks 24.2, 23.1 engaged with each other, and the slidable door plate 23 on its part holds the slidable door plate 22 positioned directly below by means of the respective hooks 23.2, 22.1 engaged with each other.

The upmost slidable door plate 24, however, in said closed state is arrested relative to the frame portion 10 by means of an fastener 50 which in this embodiment comprises a magnetic block 51 and an elastic element (e.g., a spring) 52 urging the magnetic block 51 into a position in which it engages with a hook portion 24.1 of the upmost door plate 24.

In particular, due to the engaging hook portions described above, by arresting the upmost slidable door plate 24, the fastener 50 thus serves to lock the door portion 20 in a predetermined position relative to the frame portion 10, in which predetermined position the door portion 20 closes the opening O.

In the exemplary embodiment shown in Figures 1a, 1b, the magnetic block 51 of the fastener 50 can be moved against the elastic force of the elastic element 52 by means of an electromagnet 60 adapted to attract the magnetic block 51. Thereby, the fastener 50 thus can be operated to unlock the door portion, which in the present case will cause the slidable door pates 24, 23, 22 to fall down to the lower edge of the frame portion. Thereby, the anti-sloshing wall arrangement reaches its unclosed state shown in Figure 1a.

The exemplary anti-sloshing wall arrangement 100 shown in Figures 1a, 1b further comprises a linear motor 30 configured to operate the door portion 20 for closing the opening O. As referenced in Figure 1a, the linear motor 30 comprises a band of electromagnets 31 fixed to the frame portion 10, and a band of permanent magnets 32 fixed to the slidable door plate 24 which in a closed state of the anti-sloshing wall arrangement 100 is the upmost one of the slidable door plates 22, 23, 24.

An analogous further linear motor is arranged opposite to the linear motor 30 and comprises a band of permanent magnets 42 likewise fixed to said slidable door plate 24, and a band of electromagnets which is not visible in Figure 1a, 1b due to the perspective thereof.

In Figures 1a, 1b, the band of electromagnets 31 is depicted as positioned on a frame portion's surface facing the opening O. The band of electromagnets 31 may comprise a cover (not shown) protecting the electromagnets against a liquid the tank may contain. Alternatively (not shown in Figures 1a, 1b), the band of electromagnets 31 could be arranged on a frame portion's surface which faces away from the opening O. In this case, the magnetic fields of the electromagnets may penetrate the frame portion.

The linear motor 30 and the further linear motor both are configured to elevate the slidable door plate 24 which in a closed state of the anti-sloshing wall arrangement 100 is the upmost one of the slidable door plates 22, 23, 24. The hook portions 22.1, 23.1, 23.2, 24.2 then serve (further to holding, in the closed state of the anti-sloshing wall arrangement, the respective underneath sliding door plate as described above) to pull the respective underneath sliding door plate 22, 23 upwards during a process of closing the opening O by the door portion 20. As a consequence, the door portion 20 can be operated, for closing the opening O, by means of the linear motor 30 and the further linear motor.

As further seen in Figures 1a, 1b, the tank 1000 also comprises a pipe system running through the anti -sloshing wall arrangement 100, the pipe system including a venting pipe 301 (which may be configured to convey boil-off gas out of the tank 1000) as well as two extraction and/or filling pipes 302. As is to be understood, the tank 1000 may comprise further components such as a heater and/or at least one sensor, which are not shown in the figures, and/or the pipe system may be different than that shown or even be optional.

In the exemplary embodiment shown in Figures 1a, 1b, one of the pipes of the pipe system, namely the venting pipe 301 in this case, runs through the opening O. The door portion 20, in particular the slidable door plate 24 thereof, forms a recess R the venting pipe 301 runs through when the door portion 20 is closing the opening. Accordingly, the venting pipe is prevented to interfere with the door portion 20 when this closes the opening.

According to alternative embodiments, all pipes of the pipe system could run through the frame portion of the anti-sloshing wall arrangement, such that the opening edged by the frame portion is devoid of pipes.

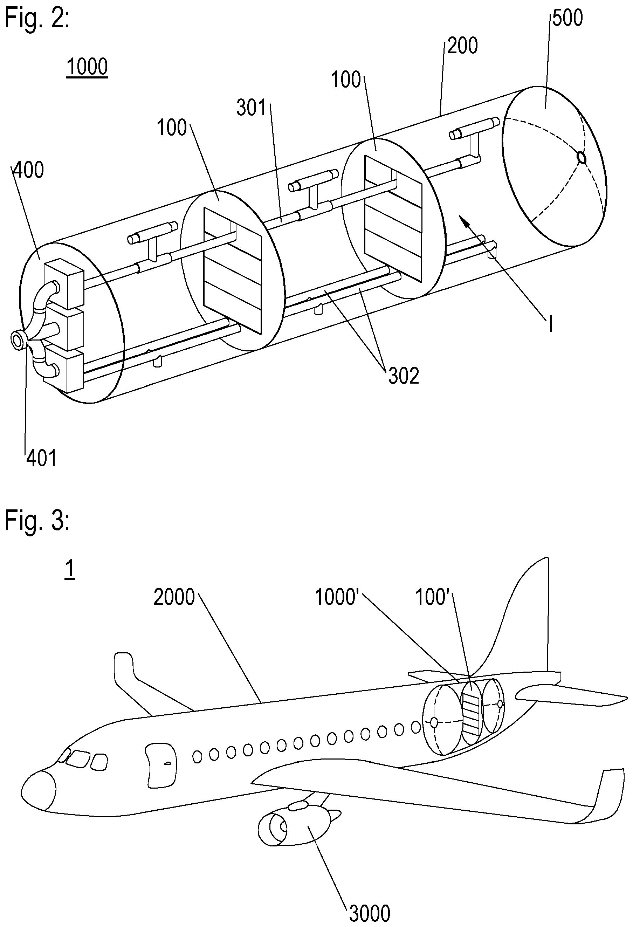

Figure 2 provides a (simplified) illustration of the entire tank 1000 which in this exemplary embodiment comprises two anti-sloshing wall arrangements 100, each of them being shown, in Figure 1c, in a closed state.

As can be further taken from Figure 2, the tank wall 200 of the tank 1000 is connected, at its ends, to opposite heads 400, 500. The heads and the tank wall 200 in conjunction enclose an interior space I of the tank, i.e., a tank volume designated for containing a liquid. One of the heads 400 comprises a pipe connection arrangement 401 connected to the pipe system including the venting pipe 301 and the extraction and/or filling pipes 302.

In particular, the tank 1000 may be a liquid hydrogen tank. For instance, it may be configured as a pressure vessel adapted to store liquid hydrogen at a temperature below -240°C and at a pressure in the range of 2,5 bar to 3,5bar. In particular, in such cases, the heads 400, 500 may preferably be pressure heads, and the pipes 301, 302 as well as the pipe connection arrangement 401 may be configured to conduct hydrogen.

The tank 1000 preferably further comprises an entrance into its interior space I (not shown in the figures). Such entrance may provide access for a person or a tool (such as a robot or robot arm) to the interior space I, such as for inspection, reparation and/or cleaning purposes. In advantageous embodiments, in which the opening edged by the respective frame portion of the anti-sloshing wall arrangement provides a passage for the person or tool, the tank may advantageously comprise a single entrance into its interior space I only.

Figure 3 provides a partial insight into an aircraft 1 according to an exemplary embodiment of the present invention, the aircraft 1 comprising, in its aft portion, a tank 1000' according to an exemplary embodiment of the present invention, which tank in this case comprises a single anti-sloshing wall arrangement 100'.

The aircraft 1 further comprises a fuselage 2000 and two engines 3000 (only one of which is visible due to the perspective of Figure 3). In particular, the tank 1000' may be a liquid hydrogen tank, and the engines 3000 may be a hydrogen fuel burn turbo fan to be fed with liquid hydrogen from the tank 1000'.

In the case shown in Figure 3, the tank 1000' is a vessel independent of the fuselage 2000 in the inner space of which the tank 1000' is installed. According to alternative embodiments, the aircraft may comprise a tank according to an embodiment of the present invention which is integrated in the aircraft's fuselage, such that a portion of a skin (i.e., of a shell) of the fuselage serves as a tank wall of the tank (not shown).

Disclosed is a tank 1000, 1000' comprising one or several anti-sloshing wall arrangement/s 100, 100', with a frame portion 10 and a door portion 20, wherein the frame portion 10 is fixed to a tank wall 200 of the tank, and it edges an opening O, and wherein the door portion 20 is configured to selectively close or unclose the opening O.

Further disclosed is an aircraft 1 comprising such tank and at least one engine 3000, the engine 3000 being configured to be fed with fuel, in particular with liquid hydrogen, contained in the tank.

### References

- 1: aircraft
- 10: frame portion
- 11: slide rail
- 20: door portion
- 21: fixed door plate
- 22, 23, 24: sliding door plate
- 22.1, 23.1, 23.2, 24.1, 24.2: hook portion of sliding door plate
- 30: motor
- 31: band of electromagnets
- 32: band of permanent magnets
- 42: band of permanent magnets
- 50: fastener
- 51: magnetic block
- 52: elastic element
- 60: electric motor
- 100, 100': anti-sloshing wall arrangement
- 200: tank wall
- 301: venting pipe
- 302: supply/ filling pipes
- 400: head
- 401: pipe connections
- 500: head
- 1000, 1000': tank
- 2000: fuselage
- 3000: engine
- I: interior of tank
- O: opening
- R: recess

## Claims

1. Tank (1000, 1000') for an aircraft (1), the tank comprising at least one anti-sloshing wall arrangement (100, 100'), wherein the anti-sloshing wall arrangement (100, 100') includes a frame portion (10) fixed to a tank wall (200) of the tank, and
**characterised in that** it further includes a door portion (20) configured to selectively close or unclose an opening (O) edged by the frame portion (10).

2. Tank according to claim 1, wherein the door portion (20) comprises one or several sliding door plate/s (22, 23, 24) configured to linearly move relative to the frame portion (10) for selectively closing or unclosing the opening (O).

3. Tank according to claim 2, wherein the frame portion (10) comprises at least one slide rail (11) guiding the sliding door plate/s (22, 23, 24).

4. Tank according to one of claims 2 or 3, wherein in an orientation designated for use of the tank, the sliding door plate/s (22, 23, 24) is/are configured to slide vertically.

5. Tank according to one of claims 2 to 4, wherein the door portion (20) comprises several sliding door plates (22, 23, 24), at least two of which have a respective hook portion (22.1, 23.1, 23.2, 24.2) configured to engage with the hook portion of the respective other sliding door plate.

6. Tank according to one of the preceding claims, wherein the at least one anti-sloshing wall arrangement (100) comprises a fastener (50) for selectively locking or unlocking the door portion (20) in a predetermined position relative to the frame portion (10).

7. Tank according to claim 6, wherein the fastener (50) is operable by means of an electromagnet (60) comprised by the at least one anti-sloshing wall arrangement (100).

8. Tank according to one of the preceding claims, further comprising a motor (30) configured to operate the door portion (20) for closing and/or unclosing the opening (O).

9. Tank according to one of the preceding claims, wherein the opening (O) includes an area of at least 45cm x 50cm, at least 45cm x 45cm, or at least 30cm x 45cm.

10. Tank according to one of the preceding claims, wherein the tank has a single entrance into its interior space (I).

11. Tank according to one of the preceding claims, which is configured as a pressure vessel for containing liquid hydrogen.

12. Tank according to one of the preceding claims, which is mounted - or configured to be mounted - in an aircraft (1), for feeding an engine (3000) of the aircraft with fuel contained in the tank.

13. Aircraft (1) comprising a tank (1000, 1000') according to claim 12, and at least one engine (3000) configured to be fed with fuel contained in the tank.

14. Aircraft according to claim 13, wherein the tank is integrated in a fuselage (2000) of the tank.

## Patentansprüche

1. Tank (1000, 1000') für ein Flugzeug (1), wobei der Tank mindestens eine Schwappschutzwand-Anordnung (100, 100') umfasst, wobei
die Schwappschutzwand-Anordnung (100, 100') einen Rahmenabschnitt (10) einschließt, der an einer Tankwand (200) des Tanks befestigt ist, und
**dadurch gekennzeichnet, dass** sie ferner einen Türabschnitt (20) einschließt, der dafür konfiguriert ist, selektiv eine Öffnung (O) zu schließen oder zu öffnen, die durch den Rahmenabschnitt (10) eingefasst wird.

2. Tank nach Anspruch 1, wobei der Türabschnitt (20) eine oder mehrere Schiebetürplatte(n) (22, 23, 24) umfasst, die dafür konfiguriert sind, sich zum selektiven Schließen oder Öffnen der Öffnung (O) linear relativ zu dem Rahmenabschnitt (10) zu bewegen.

3. Tank nach Anspruch 2, wobei der Rahmenabschnitt (10) mindestens eine Gleitschiene (11) umfasst, welche die Schiebetürplatte(n) (22, 23, 24) führt.

4. Tank nach einem der Ansprüche 2 oder 3, wobei in einer Ausrichtung, die für eine Verwendung des Tanks vorgesehen ist, die Schiebetürplatte(n) (22, 23, 24) dafür konfiguriert ist/sind, sich seitlich zu verschieben.

5. Tank nach einem der Ansprüche 2 bis 4, wobei der Türabschnitt (20) mehrere Schiebetürplatten (22, 23, 24) umfasst, von denen mindestens zwei einen jeweiligen Hakenabschnitt (22.1, 23.1, 23.2, 24.2) aufweisen, der dafür konfiguriert ist, mit dem Hakenabschnitt der jeweiligen anderen Schiebetürplatte ineinanderzugreifen.

6. Tank nach einem der vorhergehenden Ansprüche, wobei die mindestens eine Schwappschutzwand-Anordnung (100) ein Befestigungselement (50) zum selektiven Verriegeln oder Entriegeln des Türabschnitts (20) in einer vorbestimmten Position relativ zu dem Rahmenabschnitt (10) umfasst.

7. Tank nach Anspruch 6, wobei das Befestigungselement (50) mit Hilfe eines Elektromagneten (60) betätigt werden kann, der in der mindestens einen Schwappschutzwand-Anordnung (100) enthalten ist.

8. Tank nach einem der vorhergehenden Ansprüche, der ferner einen Motor (30) umfasst, der dafür konfiguriert ist, den Türabschnitt (20) zum Schließen und/oder Öffnen der Öffnung (O) zu betätigen.

9. Tank nach einem der vorhergehenden Ansprüche, wobei die Öffnung (O) eine Fläche von mindestens 45 cm x 50 cm, mindestens 45 cm x 45 cm oder mindestens 30 cm x 45 cm einschließt.

10. Tank nach einem der vorhergehenden Ansprüche, wobei der Tank einen einzigen Eingang in seinen Innenraum (I) aufweist.

11. Tank nach einem der vorhergehenden Ansprüche, der als ein Druckgefäß zum Enthalten von flüssigem Wasserstoff konfiguriert ist.

12. Tank nach einem der vorhergehenden Ansprüche, der in einem Flugzeug (1) montiert ist - oder dafür konfiguriert ist, montiert zu werden -, zum Speisen eines Triebwerks (3000) des Flugzeugs mit Kraftstoff, der in dem Tank enthalten ist.

13. Flugzeug (1), das einen Tank (1000, 1000') nach Anspruch 12 und mindestens ein Triebwerk (3000), das dafür konfiguriert ist, mit Kraftstoff gespeist zu werden, der in dem Tank enthalten ist, umfasst.

14. Flugzeug nach Anspruch 13, wobei der Tank in einem Rumpf (2000) des Tanks integriert ist.

## Revendications

1. Réservoir (1000, 1000') pour un avion (1), le réservoir comprenant au moins un agencement de cloisons anti-ballottement (100, 100'), dans lequel l'agencement de cloisons anti-ballottement (100, 100') inclut une partie de cadre (10) fixée à une cloison (200) du réservoir, et
**caractérisé en ce qu'**il inclut en outre une partie de porte (20) configurée pour fermer ou ouvrir de manière sélective une ouverture (O) bordée par la partie de cadre (10).

2. Réservoir selon la revendication 1, dans lequel la partie de porte (20) comprend une ou plusieurs plaque(s) de porte coulissante(s) (22, 23, 24) configurées pour se déplacer de manière linéaire par rapport à la partie de cadre (10) pour fermer ou ouvrir l'ouverture (O) de manière sélective.

3. Réservoir selon la revendication 2, dans lequel la partie de cadre (10) comprend au moins un rail coulissant (11) guidant la ou les plaque(s) de porte coulissante(s) (22, 23, 24).

4. Réservoir selon l'une des revendications 2 ou 3, dans lequel dans une orientation désignée pour l'utilisation du réservoir, la ou les plaque(s) de porte coulissante(s) (22, 23, 24) est/sont configurée(s) pour coulisser verticalement.

5. Réservoir selon l'une des revendications 2 à 4, dans lequel la partie de porte (20) comprend plusieurs plaques de porte coulissantes (22, 23, 24), dont au moins deux ont une partie de crochet respective (22.1, 23.1, 23.2, 24.2) configurée pour s'engager avec la partie de crochet de l'autre plaque de porte coulissante respective.

6. Réservoir selon l'une des revendications précédentes, dans lequel l'au moins un agencement de cloisons anti-ballottement (100) comprend une fixation (50) pour verrouiller ou déverrouiller de manière sélective la partie de porte (20) dans une position prédéterminée par rapport à la partie de cadre (10).

7. Réservoir selon la revendication 6, dans lequel la fixation (50) peut fonctionner au moyen d'un électroaimant (60) compris par l'au moins un agencement de cloisons anti-ballottement (100).

8. Réservoir selon l'une des revendications précédentes, comprenant en outre un moteur (30) configuré pour faire fonctionner la partie de porte (20) pour fermer et/ou ouvrir l'ouverture (O).

9. Réservoir selon l'une des revendications précédentes, dans lequel l'ouverture (O) inclut une aire d'au moins 45cm x 50cm, d'au moins 45cm x 45cm ou d'au moins 30cm x 45cm.

10. Réservoir selon l'une des revendications précédentes, dans lequel le réservoir présente une entrée unique dans son espace intérieur (I).

11. Réservoir selon l'une des revendications précédentes, qui est configuré en tant qu'un récipient sous pression pour contenir de l'hydrogène liquide.

12. Réservoir selon l'une des revendications précédentes, qui est monté (ou configuré pour être monté) dans un avion (1), pour alimenter un moteur (3000) de l'avion en carburant contenu dans le réservoir.

13. Avion (1) comprenant un réservoir (1000, 1000') selon la revendication 12, et au moins un moteur (3000) configuré pour être alimenté en carburant contenu dans le réservoir.

14. Avion selon la revendication 13, dans lequel le réservoir est intégré dans un fuselage (2000) du réservoir.
